# FASCICULE DE BREVET EUROPEEN

(11) **EP 0 685 535 B1**
(45) Date de publication et mention de la délivrance du brevet: **07.01.1998**
(21) Numéro de dépôt: 95870054.4
(22) Date de dépôt: 16.05.1995
(51) Int. Cl.: C09D 4/00

(54) **Compositions durcissables par rayonnement**
Strahlungshärtbare Zusammensetzungen
Radiation-curable compositions

(30) Priorité: 31.05.1994 GB 9410867
(43) Date de publication de la demande: 06.12.1995
(73) Titulaire: U C B, S.A., 1050 Bruxelles (BE)
(72) Inventeur: Peeters, Stephan, B-3001 Heverlee (BE); Vanden Eynde, Ivan, B-3140 Keerbergen (BE); Van Gysel, August, B-1700 Dilbeek (BE); Loutz, Jean-Marie, B-1180 Bruxelles (BE)
(74) Mandataire: Dusseldorp, Raymond

(56) Documents cités:
- FR-A- 2 163 769
- Bases de données "Chemical Abstracts, Registry" (Serveur: STN), abrégé n 119: 103 399 & R.N. correspondants, Colombus, OH, USA; & JP-A-05 080 279 (SEIKO EPSON CORP)
- Bases de données "Chemical Abstracts, Registry " (Serveur: STN), abrégé n 119: 210 784 & R.N. correspondants, Colombus, Ohio, USA; & JP-A-05 150 197(SEIKO EPSON CORP.)

## Description

La présente invention se rapporte à des nouvelles compositions durcissables par rayonnement comprenant un acrylate ou méthacrylate de (2-oxo-1-pyrrolidinyl)alkyle comme diluant réactif. Ces compositions présentent une grande vitesse de durcissement par irradiation ultraviolette ou par faisceau d'électrons accélérés et se prêtent à la production de revêtements présentant un ensemble d'excellentes qualités, comme une bonne adhérence sur les substrats les plus divers, une dureté de surface élevée, une résistance améliorée à l'abrasion et aux agents chimiques et de bonnes propriétés mécaniques.

Les compositions durcissables au moyen de rayons ultraviolets ou de faisceaux d'électrons accélérés ont déjà fait l'objet de nombreuses publications sous forme d'articles et de brevets. De telles compositions ont trouvé une large gamme d'applications dans de nombreux domaines, par exemple comme enduits, vernis et peintures pour la protection et la décoration des substrats les plus divers comme le verre, les métaux, les matières plastiques, le papier, comme vernis et encres d'imprimerie durcissant sous l'action des rayons ultraviolets, comme adhésifs pour laminés.

Par rapport aux compositions durcissant grâce à un apport de chaleur, les compositions durcissables par rayonnement présentent de nombreux avantages. Tout d'abord, ces compositions ne contiennent pas de solvants, à l'inverse des compositions thermodurcissables, vu que l'on choisit les constituants en sorte qu'ils polymérisent tous pratiquement complètement lors du durcissement; on élimine ainsi une source importante de pollution de l'environnement. Ensuite, le durcissement par rayonnement requiert moins d'énergie que l'apport calorifique requis pour l'évaporation des solvants et le durcissement des compositions thermodurcissables, ce qui représente une économie d'énergie non négligeable; ce mode de durcissement présente en outre l'avantage d'être réalisé à basse température et donc d'autoriser l'enduction de substrats sensibles à la chaleur. Enfin, dans beaucoup d'applications, les compositions durcissables par rayonnement permettent de travailler à des cadences de production très élevées et en continu, parce que ces compositions durcissent en moins de 1 seconde, ce qui n'est pas le cas des compositions durcissant par la chaleur. De plus, ces compositions durcissables par rayonnement permettent souvent d'atteindre des performances que d'autres types de compositions ne permettent pas d'obtenir.

Les compositions durcissables par rayonnement sont généralement composées d'un mélange des divers composants réactifs suivants:
- un ou plusieurs oligomères ou prépolymères réactifs radiopolymérisables dont le poids moléculaire est généralement inférieur à 10.000 et qui portent sur les extrémités des chaînes ou en position latérale le long de la chaîne des groupes acryliques, méthacryliques, vinyliques, ou allyliques. De tels oligomères ou prépolymères sont bien connus et disponibles dans le commerce et ont été décrits pour une grande variété de structures, tels que polyesters, polyacryliques, polyépoxydes, polyuréthannes. Des exemples de ces composés radiopolymérisables sont des époxy acrylates ou méthacrylates tels que décrits dans les brevets américains 3.676.398, 3.770.602 et 4.511.732, des uréthanne acrylates ou méthacrylates tels que décrits dans les brevets américains 3.700.643, 4.133.723 et 4.188.455, des polyester acrylates ou méthacrylates tels que décrits dans les brevets américains 4.206.025 et 5.002.976, des acrylique acrylates ou méthacrylates, etc.
   Les oligomères ou prépolymères réactifs sont choisis en fonction de leurs propriétés filmogènes et des performances souhaitées (dureté ou flexibilité, ténacité, résistance aux agents chimiques et résistance aux intempéries) des revêtements préparés à partir des compositions durcissables par rayonnement;
- un ou plusieurs monomères réactifs polyéthyléniquement insaturés qui contiennent au moins deux groupes éthyléniquement insaturés.
   Ces monomères réactifs sont de préférence des diacrylates ou polyacrylates de polyols de faible poids moléculaire, comme par exemple les diacrylates de 1,4-butanediol, de 1,6-hexanediol, de néopentyl glycol, de di-, tri- et/ou tétraéthylèneglycol, de tripropylèneglycol, le triacrylate de triméthylolpropane ou de pentaérythritol, l'hexaacrylate de dipentaérythritol. Le rôle essentiel de ces monomères réactifs est de permettre de règler la viscosité en fonction de chaque application industrielle envisagée. Etant donné que ces monomères contiennent des groupes éthyléniquement insaturés radiopolymérisables, par exemple des groupes acryliques, ils participent également au durcissement par rayonnement et, après la polymérisation, ils font définitivement partie des produits polymères finals obtenus. Pour éviter une diminution de la vitesse de durcissement sous rayonnement, on emploie de préférence des monomères portant des insaturations acryliques;
- un ou plusieurs monomères réactifs monoéthyléniquement insaturés qui contiennent un seul groupe éthyléniquement insaturé par molécule. Des exemples de tels monomères sont les monoacrylates ou monométhacrylates d'alcools aliphatiques monohydroxylés ou polyhydroxylés, le styrène, le vinyl-toluène, l'acétate de vinyle, la N-vinyl-2-pyrrolidone, la N-vinylpyridine, le N-vinylcarbazole. Ces monomères sont ajoutés aux compositions comme diluants réactifs pour abaisser la viscosité. Grâce à ces monomères réactifs monofonctionnels, on peut donc régler à volonté la viscosité des compositions, ce qui rend inutile l'intervention de solvants organiques et supprime ainsi tous les problèmes de récupération, d'intoxication et de pollution causés par ces solvants.
   Ces monomères peuvent également avoir une influence considérable sur les propriétés physiques et chimiques des revêtements finals obtenus;
- Les compositions durcissables par rayonnement contiennent en outre divers constituants auxiliaires usuels indispensables pour les adapter à leurs applications techniques spécifiques et éventuellement, un photoinitiateur généralement associé à une amine tertiaire qui, sous l'effet d'un rayonnement ultraviolet, produit des radicaux libres qui initient la réticulation (durcissement) de la composition, par exemple la benzophénone, le diméthylcétal de benzile, les thioxanthones.

A l'heure actuelle, la N-vinyl-2-pyrrolidone est très largement utilisée dans les compositions durcissables par rayonnement, non seulement parce que ce monomère réactif monofonctionnel possède un excellent pouvoir d'abaissement de la viscosité, mais surtout parce qu'il confère aux compositions qui le contiennent une réactivité très élevée.

En effet, s'il est vrai que l'on peut régler la viscosité au moyen d'un grand nombre de monomères réactifs, rares sont ceux qui abaissent la viscosité sans que ce soit au détriment de la vitesse de durcissement de la composition qui les contient. Or, la N-vinyl-2-pyrrolidone ne présente pas cet inconvénient vu qu'elle augmente la vitesse de durcissement de la composition la contenant, tout en abaissant la viscosité. En outre, ce composé est très prisé comme diluant réactif parce que les revêtements obtenus après durcissement par rayonnement possèdent généralement une très bonne résistance à l'abrasion et aux agents chimiques jointe à une excellente adhérence à divers substrats (voir par exemple le brevet américain 4.319.811).

Malheureusement, tout récemment, on s'est rendu compte que la N-vinyl-2-pyrrolidone pose des problèmes de toxicité. En effet, une étude récente de toxicité chronique effectuée chez le rat a démontré que la N-vinyl-2-pyrrolidone est cancérogène à des doses de 20 et 10 ppm administrées par inhalation pendant une période de 2 ans (J. PERNEL, "Toxicity concerns of UV inks", Polym. Paint Col. J. 182 (September 16, 1992), n° 4314, pages S9 à S12; base de données MSDS du "Canadian Center for Occupational Health and Safety", numéro d'accès 503079). Ce composé présente, en outre, des propriétés irritantes pour la peau et pour les yeux et il dégage une odeur désagréable; il s'ensuit que ce composé peut soulever des problèmes de salubrité dans les ateliers de fabrication et d'application, sans compter que ce composé est relativement coûteux.

Il subsiste donc un besoin de trouver d'autres monomères réactifs monofonctionnels utilisables comme diluants réactifs dans les compositions durcissables au moyen de rayons ultraviolets ou de faisceaux d'électrons accélérés et qui présentent les mêmes avantages que la N-vinyl-2-pyrrolidone quant au pouvoir d'abaissement de la viscosité, la réactivité et la qualité des revêtements obtenus, tout en ne posant pas de problèmes de toxicité, d'odeur et de prix de revient.

On vient maintenant de découvrir que certains acrylates et méthacrylates de (2-oxo-1-pyrrolidinyl)alkyle constituent d'excellents monomères réactifs monofonctionnels et qu'ils peuvent utilement remplacer la N-vinyl-2-pyrrolidone comme diluant réactif pour abaisser la viscosité des compositions durcissables par rayonnement au niveau exigé par la technique d'application envisagée.

On a constaté en effet que ces acrylates et méthacrylates de (2-oxo-1-pyrrolidinyl)alkyle possèdent des propriétés physico-chimiques et technologiques aussi favorables et parfois même meilleures que la N-vinyl-2-pyrrolidone, tout en ne présentant pas les inconvénients rappelés plus haut.

C'est pourquoi, la présente invention a pour objet de procurer de nouvelles compositions durcissables par rayonnement, qui sont caractérisées en ce qu'elles comprennent, pour 100 parties en poids,
(a) au moins 20 parties en poids d'au moins un composé radiopolymérisable renfermant au moins deux groupes choisis parmi CH₂=CH-COO- et CH₂=C(CH₃)-COO-, et
(b) au moins 5 parties en poids d'au moins un acrylate de (2-oxo-1-pyrrolidinyl)alkyle répondant à la formule générale 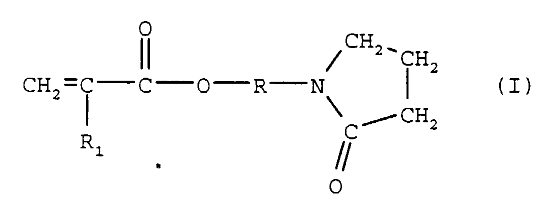 dans laquelle R représente un radical alkylène contenant 2 à 4 atomes de carbone et R₁ représente un atome d'hydrogène ou un radical méthyle.

En outre, la présente invention concerne l'utilisation de ces compositions durcissables par rayonnement, qui contiennent comme diluant réactif au moins un acrylate ou méthacrylate de (2-oxo-1-pyrrolidinyl)alkyle (b), pour la préparation d'enduits, vernis, peintures, encres et adhésifs pour laminés.

Selon un autre aspect, la présente invention se rapporte également à un procédé de revêtement d'un substrat qui est caractérisé en ce que l'on applique sur la surface dudit substrat la composition durcissable par rayonnement précitée dans laquelle l'acrylate ou méthacrylate de (2-oxo-1-pyrrolidinyl)alkyle (b) est présent en une quantité suffisante pour produire une composition ayant une viscosité substantiellement moindre que la viscosité du composé (a) et en ce que l'on expose ladite composition à des rayons ultraviolets ou un faisceau d'électrons accélérés pendant une durée suffisante pour former un revêtement durci.

Les acrylates et méthacrylates de (2-oxo-1-pyrrolidinyl)alkyle (b) qui sont présents, conformément à la présente invention, comme diluants réactifs dans les compositions durcissables par rayonnement, sont des produits connus en eux-mêmes.

Dans le brevet britannique 930.668 par exemple, on décrit la synthèse de ces acrylates et méthacrylates de (2-oxo-1-pyrrolidinyl)alkyle (b) ainsi que leur emploi pour préparer des homopolymères et des copolymères avec d'autres monomères éthyléniquement insaturés en vue de la fabrication de revêtements, de produits de moulage et de plastisols.

Dans le brevet américain 2.882.262, on décrit également la préparation des acrylates et méthacrylates de (2-oxo-1-pyrrolidinyl)alkyle (b) et on signale que ces monomères sont facilement copolymérisables avec un ou plusieurs autres composés contenant une seule insaturation éthylénique pour fournir des polymères de poids moléculaire élevé. Ces polymères sont préparés et appliqués de manière conventionnelle dans un solvant organique.

Toutefois, dans aucun des brevets cités plus haut, on ne mentionne l'emploi de ces acrylates et méthacrylates de (2-oxo-1-pyrrolidinyl)alkyle dans des compositions durcissables par rayonnement UV ou par faisceau d'électrons accélérés, lesquelles ont une teneur en matière sèche de 100 % et ne contiennent pas de solvants organiques. De plus, dans ces brevets, ces acrylates et méthacrylates particuliers ne sont jamais associés à un composé radiopolymérisable renfermant au moins deux groupes CH₂=CH-COO- ou CH₂=C(CH₃)-COO- ; ils ne peuvent donc jouer le rôle de "diluant réactif" comme c'est le cas dans le cadre de la présente invention.

Dans les demandes de brevet japonais 80279/93 et 150197/93, on décrit des compositions destinées à la fabrication de lentilles de contact souples, contenant des copolymères préparés à partir de méthacrylates de (2-oxo-1-pyrrolidinyl)alkyle et d'autres esters (méth)acryliques monofonctionnels. Ces compositions peuvent éventuellement contenir de 0,1 à 5% en poids d'un agent de réticulation, en l'occurrence un di- ou tri(méth)acrylate de polyol. Toutefois, dans ces demandes de brevet japonais, la quantité de composé renfermant deux ou trois groupes CH₂=CH-COO- ou CH₂=C(CH₃)-COO- est très faible et ne peut pas dépasser 5% en poids par rapport au poids des monomères polymérisables, afin de ne pas compromettre les propriétés de perméabilité à l'oxygène et de souplesse des lentilles de contact.

Par conséquent, le titulaire de ces demandes de brevet japonais n'a pas pu observer le rôle bénéfique des acrylates et méthacrylates de (2-oxo-1-pyrrolidinyl)alkyle comme "diluant réactif" dans les compositions durcissables par rayonnement du genre de celles faisant l'objet de la présente invention contenant au moins 20 % en poids, et de préférence davantage de composé renfermant au moins deux groupes CH₂=CH-COO- ou CH₂=C(CH₃)-COO-.

Dans la formule générale I des acrylates et méthacrylates de (2-oxo-1-pyrrolidinyl)alkyle utilisés selon la présente invention, R représente un radical alkylène contenant 2 à 4 atomes de carbone, tel que le radical -CH₂CH₂-, -CH₂CH₂CH₂-, -CH₂CH(CH₃)-, -CH₂CH₂CH₂CH₂- etc.

Parmi les acrylates et méthacrylates de (2-oxo-1-pyrrolidinyl)alkyle (b) de formule I, le méthacrylate de 2-(2-oxo-1-pyrrolidinyl)éthyle reçoit la préférence. En effet, l'emploi de ce composé monofonctionnel en tant que diluant réactif dans les compositions durcissables par rayonnement présente une série d'avantages que l'on peut résumer de la manière suivante:
(1) le méthacrylate de 2-(2-oxo-1-pyrrolidinyl)éthyle est un excellent solvant ayant un point d'ébullition élevé (128 à 134 °C sous une pression de 3.3 millibars) et une faible viscosité (16 mPa.s à 20 °C); il possède un pouvoir d'abaissement remarquable de la viscosité des compositions durcissables par rayonnement;
(2) il présente une réactivité au moins aussi grande que la N-vinyl-2-pyrrolidinone, ce qui veut dire que l'on peut régler la viscosité sans diminuer la vitesse de durcissement de la composition le contenant; pour certaines compositions, on observe même une réactivité supérieure à celle de la N-vinyl-2-pyrrolidone;
(3) après polymérisation par rayonnement, il est complètement incorporé dans le film durci;
(4) après polymérisation avec le ou les composé(s) (a), il fournit un revêtement présentant de bonnes propriétés mécaniques (résistance à la traction, flexibilité, dureté de surface) et d'autres propriétés particulières comme une bonne résistance aux solvants, à l'eau et aux salissures, un bon étalement, une bonne mouillabilité, une bonne adhérence sur les substrats les plus divers; ces propriétés sont au moins aussi bonnes que celles obtenues en utilisant la N-vinyl-2-pyrrolidone comme diluant réactif;
(5) chose surprenante, la résistance à l'abrasion des revêtements durcis est parfois même meilleure que celle obtenue en employant la N-vinyl-2-pyrrolidone;
(6) le méthacrylate de 2-(2-oxo-1-pyrrolidinyl)éthyle est non toxique, ce qui constitue un avantage par rapport à la N-vinyl-2-pyrrolidone; les DL 50 par voie orale et dermique déterminées chez le rat, sont supérieures à 2.000 mg/kg;
(7) il est moins irritant pour la peau que la N-vinyl-2-pyrrolidone;
(8) il n'est pas mutagène (test de AMES), ni cancérogène, contrairement à la N-vinyl-2-pyrrolidone;
(9) il est inodore et non polluant, vu qu'il a une tension de vapeur très basse à la température d'utilisation des compositions conformes à l'invention;
(10) étant donné les propriétés avantageuses du méthacrylate de 2-(2-oxo-1-pyrrolidinyl)éthyle, il peut servir comme diluant réactif dans toutes les compositions durcissables par rayonnement UV ou par faisceau d'électrons accélérés existantes, en remplacement de la N-vinyl-2-pyrrolidone.

L'emploi des acrylates ou des méthacrylates de (2-oxo-1-pyrrolidinyl)alkyle (b) comme diluants réactifs dans les compositions durcissables par rayonnement est donc tout indiqué en remplacement de la N-vinyl-2-pyrrolidone.

Suivant les applications auxquelles les compositions durcissables par rayonnement sont destinées, elles contiennent 5 à 50 parties en poids d'au moins un acrylate ou méthacrylate de (2-oxo-1-pyrrolidinyl)alkyle (b) pour 100 parties en poids de composition conforme à l'invention.

Les nouvelles compositions durcissables par rayonnement contiennent comme autre constituant essentiel un ou plusieurs composés radiopolymérisables (a) renfermant au moins deux groupes choisis parmi CH₂=CH-COO- et CH₂=C(CH₃)-COO-.

Une large gamme de composés (a) renfermant deux ou plus de deux groupes choisis parmi CH₂=CH-COO- et CH₂=C(CH₃)-COO- peut être utilisée dans les compositions durcissables par rayonnement conformes à l'invention.

Les composés (a) peuvent être soit des composés de faible poids moléculaire, soit des composés de poids moléculaire élevé et ils peuvent contenir 2 à 15, de préférence 2 à 6 groupes CH₂=CH-COO- et/ou CH₂=C(CH₃)-COO- par molécule. Ces composés (a) peuvent être présents dans les nouvelles compositions durcissables par rayonnement soit isolément, soit en mélange avec d'autres oligomères et/ou polymères saturés et/ou insaturés. En général, tous les monomères, oligomères ou prépolymères renfermant au moins deux groupes CH₂=CH-COO- et/ou CH₂=C(CH₃)-COO- utilisés conventionnellement pour la préparation de composés durcissables par rayonnement du type en discussion ici peuvent être utilisés; le type et le choix de ces composés dépend en particulier de l'application technique projetée de la composition et est bien connu de l'homme de métier. Pour régler la viscosité en vue d'adapter les compositions à diverses applications techniques, il est souvent avantageux de mélanger un oligomère ou prépolymère saturé ou insaturé visqueux de poids moléculaire élevé avec un ou plusieurs composés de faible poids moléculaire.

Les composés (a) de faible poids moléculaire sont les esters acryliques ou méthacryliques d'alcools polyhydriques contenant 2 à 6 groupes hydroxyle. Des exemples de composés (a) de faible poids moléculaire sont les suivants: diacrylates et diméthacrylates d'éthylèneglycol, de di-, tri-, tétra- ou polyéthylèneglycols, de di-, tri- polypropylèneglycols, de butanediol, d'hexanediol, de néopentylglycol, de bisphénol A oxyéthylé ou oxypropylé, les triacrylates et triméthacrylates de triméthyloléthane, de triméthylolpropane ou de glycérol, les tétraacrylates et tétraméthacrylates de pentaérythritol ou de ditriméthylolpropane, les hexaacrylates et hexaméthacrylates de dipentaérythritol. On peut également utiliser les acrylates et méthacrylates de ces polyalcools oxyéthylés ou oxypropylés.

Les composés (a) de poids moléculaire relativement élevé sont des oligomères ou prépolymères dont le poids moléculaire est inférieur à 10.000 et qui portent sur les extrémités de chaîne ou en position latérale le long de la chaîne, au moins deux groupes CH₂=CH-COO- et/ou CH₂=C(CH₃)-COO- . De tels oligomères ou prépolymères sont bien connus et ont été décrits par exemple dans l'ouvrage intitulé "UV & EB Curing Formulations for Printing Inks, Coating & Paints", Ed. R. HOLMAN & P. Oldring, Publ. par SITA-Technology, Londres SW18, 1988, 2^{ème} Impression, Chapitre II, pages 19 à 46.

Une catégorie d'oligomères utilisables dans les compositions selon l'invention est constituée par les polyester acrylates et méthacrylates. Ces polyester acrylates et méthacrylates sont obtenus de manière conventionnelle en préparant d'abord un polyester par polycondensation d'au moins un alcool mono- et/ou polyhydroxylé (éthylèneglycol, propylèneglycol, butanediol, néopentylglycol, hexanediol, triméthylolpropane, bisphénol A éventuellement hydrogéné ou oxyalkylé, pentaérythritol), avec au moins un acide mono-et/ou polycarboxylique (acide adipique, acide phtalique, acide isophtalique, acide téréphtalique, acide trimellitique), et en faisant réagir ensuite par exemple un polyester contenant des groupes hydroxyle avec l'acide acrylique ou méthacrylique, ou encore, en faisant réagir un polyester contenant des groupes carboxyle avec un acrylate ou méthacrylate d'hydroxyalkyle (acrylate de 2-hydroxyéthyle, acrylate de 3-hydroxypropyle, méthacrylate de 2-hydroxyéthyle) ou avec le méthacrylate de glycidyle. En utilisant des composés insaturés pour la synthèse du polyester, comme par exemple l'acide fumarique, l'acide maléique, l'acide itaconique, on obtiendra des polyesters comportant à la fois des insaturations acrylique ou méthacrylique et des insaturations éthylénique dans la chaîne du polymère. Il est également possible d'utiliser des polyesters qui contiennent des atomes d'halogène fixés sur des atomes de carbone ayant la configuration électronique sp².

Une autre catégorie d'oligomères utilisables selon l'invention est constituée par les uréthanne acrylates et méthacrylates, qui peuvent être préparés par exemple en faisant réagir un diisocyanate ou un polyisocyanate (hexaméthylène-diisocyanate, isophorone-diisocyanate, toluène-diisocyanate) avec un acrylate d'hydroxyalkyle ou un méthacrylate d'hydroxyalkyle. On peut se servir exclusivement d'acrylates d'hydroxyalkyle ou de méthacrylates d'hydroxyalkyle tels que ceux cités plus haut, mais pour allonger la chaîne, on peut également ajouter des alcools mono- ou polyhydroxylés tels que ceux cités plus haut pour la synthèse des polyesters comportant des insaturations acrylique ou méthacrylique, ou encore des polyesters ou des polyéthers contenant des groupes hydroxyle, ce qui fournira respectivement des polyester uréthannes ou des polyéther uréthannes comportant des insaturations acrylique ou méthacrylique. Ces uréthanne acrylates et méthacrylates ont de préférence un poids moléculaire inférieur à 5.000.

Une autre catégorie d'oligomères utilisables selon l'invention est constituée par les époxy acrylates et méthacrylates qui peuvent être obtenus en faisant réagir l'acide acrylique, l'acide méthacrylique ou tout autre composé contenant un groupe acide et un groupe CH₂=CH-COO- ou CH₂=C(CH₃)COO- , éventuellement en mélange avec un acide insaturé, avec des composés époxydés aliphatiques, cycloaliphatiques ou aromatiques, par exemple l'éther diglycidylique de bisphénol A, hydrogéné ou non, les éthers diglycidyliques de butanediol, de néopentylglycol ou de pentaérythritol, ou encore avec les triglycérides d'acides gras insaturés époxydés ou les novolaques époxydées. On citera à titre d'exemple
- le tri- et le tétracrylate d'huile de soja époxydée,
- le triacrylate d'huile de ricin époxydée,
- le tétra- et pentacrylate d'huile de lin époxydée,
- le tétra- et pentacrylate d'huile de tung (ou de bois de Chine) époxydée.

Une autre catégorie encore d'oligomères utilisables selon l'invention est constituée par les acrylique acrylates et méthacrylates qui peuvent être obtenus en préparant d'abord un copolymère (méth)acrylique par copolymérisation de monomères acrylique ou méthacrylique comme l'acrylate de butyle, l'acrylate de 2-éthylhexyle et le méthacrylate de méthyle avec des monomères contenant des groupements acide, anhydride, hydroxyle ou glycidyle et en faisant réagir ensuite ce copolymère avec un monomère insaturé. A titre d'exemple, on peut synthétiser en premier lieu un copolymère contenant des groupes glycidyle par la copolymérisation de monomères fonctionnalisés comme l'acrylate ou le méthacrylate de glycidyle avec d'autres monomères acryliques, que l'on fait réagir dans une deuxième étape avec de l'acide acrylique ou méthacrylique; inversement, lorsque les monomères fonctionnalisés sont l'acide acrylique ou méthacrylique, on fait réagir dans la deuxième étape le copolymère acrylique contenant des groupes carboxyle avec l'acrylate ou le méthacrylate de glycidyle.

Comme expliqué plus haut, les composés (a) utilisés selon l'invention peuvent être employés soit isolément, soit en mélange avec un ou plusieurs oligomères ou polymères saturés ou insaturés, autres que le composé (a). Des exemples de ces autres oligomères ou polymères qui peuvent également être présents dans les compositions durcissables par rayonnement sont des polyacrylates d'alkyle, des polyméthacrylates d'alkyle, des copolymères (méth)acryliques, des polyesters saturés ou insaturés ou encore des polyesters halogénés comme décrits dans les brevets américains 4.134.811 et 4.134.814.

De préférence, on utilisera dans cette forme de réalisation de l'invention des oligomères ou polymères tels que les polyesters saturés ou insaturés, les polyesters halogénés, les polymères (méth)acryliques, en mélange avec un ou plusieurs composés (a) de faible poids moléculaire c'est-à-dire les esters acryliques et méthacryliques d'alcools polyhydriques contenant 2 à 6 groupes hydroxyle dont de nombreux exemples ont été cités plus haut et qui serviront de diluant réactif.

Le composé (a) est essentiel dans les compositions durcissables par rayonnement conforme à l'invention. Il apporte la réactivité de polymérisation sous l'effet d'un rayonnement UV ou d'un bombardement d'électrons accélérés par la présence de ses multiples insaturations acryliques ou méthacryliques, ainsi que la dureté, la souplesse, l'adhérence sur les substrats, de même que la résistance aux solvants et la résistance aux intempéries des revêtements préparés à partir de ces compositions. Suivant les applications auxquelles les compositions durcissables par rayonnement sont destinées, elles contiennent 20 à 95, et de préférence 35 à 95, parties en poids de composé (a) renfermant au moins deux groupes CH₂=CH-COO- et/ou CH₂=C(CH₃)-COO- pour 100 parties en poids de composition conforme à l'invention.

En outre, les compositions conformes à l'invention peuvent contenir les divers constituants auxiliaires usuels, indispensables pour les adapter aux applications techniques citées plus haut. Ces constituants auxiliaires peuvent être choisis parmi
- des adjuvants,
- des charges et
- des pigments ou colorants.

Pour le durcissement des compositions conformes à l'invention avec un faisceau d'électrons accélérés, il n'est pas nécessaire d'utiliser un photoinitiateur, vu que ce type de rayonnement assure à lui seul une production suffisamment importante de radicaux libres pour que le durcissement soit extrêmement rapide. Par contre, lorsqu'il s'agit de photodurcir les compositions conformes à l'invention avec un rayonnement dont les longueurs d'ondes sont comprises entre 200 et 500 nanomètres (rayonnement UV), la présence d'au moins un photoinitiateur est indispensable.

Les photoinitiateurs utilisables selon la présente invention sont choisis parmis ceux couramment utilisés à cet effet.

Les photoinitiateurs appropriés qui peuvent être utilisés sont les composés carbonylés aromatiques tels que la benzophénone et ses dérivés alkylés ou halogénés, l'anthraquinone et ses dérivés, la thioxanthone et ses dérivés, les éthers de la benzoïne, les diones-alpha aromatiques ou non-aromatiques, les dialkylcétals de benzile et les dérivés de l'acétophénone.

Les photoinitiateurs pouvant convenir sont par exemple l'acétophénone, la propiophénone, la 2-phényl-acétophénone, la 2-chloro-2-phényl-acétophénone, la 2,2-dichloro-2-phényl-acétophénone, la 2-butyloxy-2-phényl-acétophénone, la 2,2-diméthoxy-2-phényl-acétophénone, la 2,2-diéthoxy-acétophénone, la 2-méthylol-2-méthoxy-2-phényl-acétophénone, la benzophénone, la 4-trichlorométhylbenzophénone, l'indénone, la 1,3-indanedione, la fluorénone, la xanthone, la thioxanthone, la 2-chlorothioxanthone, l'anthraquinone, la 2-éthylanthraquinone, le biacétyle, le glyoxal, la 1,2-indanedione, le p-chlorophényl-glyoxal, le benzile, la camphoquinone, les éthers méthylique et éthylique de la benzoïne.

L'action photoinitiatrice des photoinitiateurs est, dans certains cas, fortement améliorée par des amines tertiaires caractérisées par la présence d'au moins un atome d'hydrogène sur l'atome de carbone voisin de l'azote. Des amines tertiaires pouvant convenir sont: la triméthylamine, la triéthanolamine, la N-méthyl-diéthanolamine, la N,N-diméthyl-éthanolamine, la N,N-diméthylstéarylamine, la N,N-diméthylaniline, la N,N-di(2-hydroxyéthyl)aniline ou les aminoacrylates tels que le produit d'addition d'une amine secondaire telle que la diméthylamine, la diéthylamine, la diéthanolamine, avec un acrylate de polyol tel que le diacrylate de triméthylolpropane.

Il peut être avantageux dans certains cas d'associer dans la même molécule la fonction amine tertiaire, dont au moins un atome de carbone en alpha, par rapport à l'azote, porte au moins un atome d'hydrogène, avec la fonction cétone aromatique, comme par exemple: la 2-isopropyloxy-2-(4-diméthylaminophényl)propiophénone, la 4-diméthylaminobenzophénone, la 4,4'-bis(diméthylamino)benzophénone, la 2-diéthylamino-9-fluorènone, la 7-diéthylamino-4-méthylcoumarine, la N-méthylacridone. De même, on peut associer dans une même molécule la fonction amine tertiaire, dont au moins un atome de carbone en alpha, par rapport à l'azote, porte au moins un atome d'hydrogène, avec au moins un radical acrylique ou méthacrylique, comme par exemple: les mono-, di- et triacrylates ou méthacrylates de la triéthanolamine, de la N-méthyldiéthanolamine, de la N,N-diméthyléthanolamine ou de la N,N-di(2-hydroxyéthyl)aniline.

Les compositions conformes à l'invention contiennent 0 à 15 et, de préférence 0,2 à 10 parties en poids de photoinitiateur pour 100 parties en poids de composition conforme à l'invention.

A titre d'exemples d'adjuvants on citera:
- des agents modificateurs de viscosité ou des agents thixotropes connus en eux-mêmes,
- des solvants en très faible quantité en vue d'obtenir des performances spécifiques, par exemple une bonne adhésion sur un substrat de polycarbonate,
- des agents antimoussants connus en eux-mêmes,
- des agents d'écoulement connus en eux-mêmes,
- des inhibiteurs de polymérisation destinés à assurer la stabilité à l'entreposage, par exemple des quinones, des hydroquinones, des dérivés phénoliques substitués,
- des agents mouillants assurant une bonne mouillabilité des pigments,
- des agents glissants.

Selon les applications visées, les compositions conformes à l'invention contiennent 0 à 10, de préférence 0 à 5 parties en poids de ces adjuvants par 100 parties en poids de composition conforme à l'invention.

Les charges utilisées dans les compositions radiodurcissables conformes à l'invention peuvent être transparentes aux rayons UV, c'est-à-dire avoir une absorption minimale aux longueurs d'ondes de 200 à 500 nanomètres du spectre, comme par exemple du carbonate de calcium ou de magnésium précipité ou micronisé (calcite, aragonite), du sulfate de baryum ou de calcium (baryte, blanc fixe), du silicoaluminate de potassium ou de magnésium hydraté micronisé, du silicate de magnésium micronisé, de l'hydrate d'alumine précipité, de l'asbestine, du talc micronisé ou non. Toutefois, on peut utiliser des pigments opacifiants minéraux tels que des oxydes de titane, de zinc, de fer ou de chrome, des sulfures de zinc ou de cadmium, des phosphates de manganèse ou d'ammonium, des aluminates de cobalt, à condition d'utiliser une énergie d'irradiation plus élevée, par exemple un nombre de radiateurs UV plus élevé.

Selon les applications visées, les compositions conformes à l'invention contiennent 0 à 50 parties en poids de charges pour 100 parties en poids de composition conforme à l'invention.

Les pigments ou colorants sont ajoutés aux compositions conformes à l'invention pour conférer les propriétés colorimétriques désirées. Ces colorants ou pigments ne doivent ni retarder ni inhiber la polymérisation du liant; en outre ils ne doivent ni réagir chimiquement avec le système photoinitiateur ni adsorber celui-ci. Ils sont de préférence choisis parmi les produits cités au "Colour Index" dont l'absorption dans les longueurs d'onde comprises entre 200 et 500 nanomètres est aussi faible que possible.

Selon les applications envisagées, les compositions conformes à l'invention contiennent 0 à 40 parties en poids de pigments ou colorants pour 100 parties en poids de composition conforme à l'invention.

Si les compositions sont destinées à servir de vernis, on mélange de manière homogène les composés (a) et (b) avec le photoinitiateur et les adjuvants éventuels dans un mélangeur, au besoin à chaud lorsque le composé (a) est solide ou semi-solide, sans toutefois dépasser environ 90°C pour ne pas provoquer un début de réticulation; au cas où la viscosité serait trop élevée pour l'usage envisagé, on peut la corriger en ajoutant à la composition la proportion adéquate d'un acrylate ou méthacrylate de (2-oxo-1-pyrrolidinyl)alkyle (b).

Lorsque les compositions contiennent en outre des charges et des pigments ou des colorants, par exemple dans l'emploi comme enduits, peintures et encres, on disperse ces charges et pigments dans une partie des composés (a) et (b) dans un mélangeur ordinaire et on fait passer ce mélange dans un tricylindre, éventuellement à chaud comme indiqué plus haut, en sorte d'obtenir un produit homogène dans lequel les charges et pigments sont parfaitement mouillés par le liant. On ajoute ensuite le système photoinitiateur et les adjuvants, puis on ajuste la viscosité avec le restant des composés (a) et (b). Si nécessaire, on corrige la viscosité finale de la composition avec de l'acrylate ou du méthacrylate de (2-oxo-1-pyrrolidinyl)alkyle (b).

Les compositions conformes à l'invention sont conservées dans des récipients opaques à la lumière, dans des endroits frais pour éviter une exposition au rayonnement solaire direct ou à travers des fenêtres.

Les compositions conformes à l'invention sont durcissables en lumière ultraviolette émise, par exemple par des radiateurs UV à vapeur de mercure à moyenne pression d'au moins 80 W/cm linéaire, munis de préférence d'un réflecteur ou par des lampes sans électrode du type commercialisé par FUSION SYSTEM, à une distance d'environ 8 à 50 cm. On peut également utiliser d'autres types de lampes, par exemple des lampes UV-flash, comme celles commercialisées par Hensel, ou bien des lampes au xénon pulsé, comme celles commercialisées par IST.

Elles sont également durcissables avec des faisceaux d'électrons accélérés d'au moins 150 KeV, la puissance des appareils employés étant directement fonction de l'épaisseur de la couche de composition à durcir.

Sous l'influence de ces deux sources d'irradiation, les compositions de l'invention durcissent complètement en un temps pouvant aller d'une fraction de seconde à environ 5 secondes. Dans les exemples qui suivent, on exprime généralement la vitesse de durcissement par la vitesse linéaire de passage de la composition sous la source d'irradiation en m/minute. Comme la largeur de la bande UV focalisée est d'environ 2,5 cm, une vitesse linéaire de 1,5 m/minute sous une lampe UV représente une durée d'irradiation de 1 seconde. Donc, pour une vitesse de passage par exemple de 15 m/minute, celle-ci représente une durée d'irradiation de 1/10 de seconde.

Les compositions conformes à l'invention peuvent être appliquées en une couche ayant une épaisseur de quelques micromètres, suivant des méthodes connues en soi et sur les substrats les plus divers, comme par exemple le bois, le carton, le papier, les textiles, les métaux de différente nature, les matières plastiques comme les polycarbonates, les poly(méth)acrylates, les polyoléfines, les polystyrènes, les chlorures de polyvinyle, les polyesters, les polyuréthannes, les polyamides, les copolymères comme l'acrylonitrile-butadiène-styrène (ABS) ou l'acétate-butyrate de cellulose.

Les compositions qui contiennent comme liants les composés (a) et (b) conformes à l'invention se prêtent à des usages techniques variés dont on se propose de citer quelques exemples.

Ainsi, on peut préparer des compositions pour vernis UV et pour des encres UV sérigraphiques de marquage dans la fabrication de circuits imprimés. Ces mêmes encres UV peuvent également s'employer pour l'impression de substrats tels que le papier, carton, verre, métal, matières plastiques, simili-cuirs (notamment en polyuréthannes et PVC), pour le marquage de bouteilles en polyéthylène, polypropylène. Les compositions peuvent aussi servir comme vernis et comme encres en flexographie et comme vernis à appliquer au rouleau sur les substrats mentionnés plus haut, en particulier sur le bois, le carton, le PVC rigide et semi-rigide. Elles sont également utilisables comme bouche-pores et comme peintures à durcissement ultra-rapide par bombardement d'électrons accélérés pour la finition du bois, du carton fort, des agglomérés de bois, dans l'industrie du meuble et du bâtiment. De même, on peut les employer comme adhésifs pour la production de laminés.

Les compositions conformes à l'invention bénéficient de tous les avantages propres à ce genre de produits, entre autres d'une très grande vitesse de durcissement par irradiation ultraviolette ou par faisceau d'électrons accélérés et d'une résistance améliorée à l'abrasion et aux agents chimiques, tout en ne présentant pas les inconvénients inhérents à cette catégorie de compositions.

Les propriétés mécaniques des produits durcis sont excellentes, de même que la dureté de surface, la résistance au frottement, aux salissures, à l'eau et aux solvants ainsi que la qualité du brillant.

En ce qui concerne les enduits, vernis, peintures et encres conformes à l'invention, ils présentent l'avantage de montrer une adhérence améliorée sur les substrats les plus divers. Ces propriétés améliorées sont dues à la présence de l'acrylate ou du méthacrylate de (2-oxo-1-pyrrolidinyl)alkyle (b) dans la composition de l'invention en association physique avec le composé polyinsaturé (a). Comme on le montrera dans les exemples qui suivent, la suppression de la N-vinyl-2-pyrrolidone et son remplacement par le composé (b) n'entraîne pas de défauts tels qu'une réactivité ou une adhérence déficientes; mais au contraire, on obtient parfois même des propriétés améliorées. En outre, on ne rencontre pas de problèmes écologiques que ce soit au stade de fabrication ou à celui d'application.

Enfin, les compositions conformes à l'invention ne contiennent pas de substances aux propriétés nocives, à la différence de certaines compositions durcissables par rayonnement qui en renferment, ce qui diminue les frais dûs aux mesures de salubrité à prendre pour la protection du personnel des ateliers, tant de fabrication que d'utilisation desdites compositions.

Les exemples de mise en oeuvre ci-dessous illustrent la présente invention. Sauf avis contraire, les parties et les pourcentages indiqués dans les exemples sont exprimés en poids.

Dans ces exemples, les différents composés utilisés sont désignés par les abréviations et les noms commerciaux suivants:
- HEPMA :: méthacrylate de 2-(2-oxo-1-pyrrolidinyl)éthyle;
- HEPA :: acrylate de 2-(2-oxo-1-pyrrolidinyl)éthyle;
- NVP :: N-vinyl-2-pyrrolidone;
- HDDA :: diacrylate de 1,6-hexanediol;
- TPGDA :: diacrylate de tripropylèneglycol;
- OTA 480 :: triacrylate du produit d'addition de 3 moles d'oxyde de propylène sur 1 mole de glycérol, de la société UCB S.A.;
- Irgacure 500 :: photoinitiateur de la société Ciba-Geigy Ltd. (mélange 50/50 de benzophénone et de 1-hydroxycyclohexylphénylcétone);
- Irgacure 184 :: photoinitiateur de la société Ciba-Geigy Ltd. (1-hydroxycyclohexylphénylcétone);
- Irgacure 651 :: photoinitiateur de la société Ciba-Geigy Ltd. (2,2-diméthoxy-2-phénylacétophénone);
- Darocur 1173 :: photoinitiateur de la société Ciba-Geigy Ltd. (2-hydroxy-2-méthyl-1-phénylpropane-1-one);
- Ebecryl P 115 :: aminoacrylate de la société UCB S.A.;
- Ebecryl 350 :: silicone diacrylate de la société UCB S.A. utilisé en tant qu'agent de glissance et de modification d'énergie de surface.

Dans ces exemples, on a utilisé des oligomères représentatifs des principales familles chimiques d'oligomères employés dans le domaine technique des compositions durcissables par rayonnement.
- Oligomère n° 1:: une solution à 85 % en poids d'un polyéther uréthanne triacrylate aliphatique et à 15 % en poids de HDDA, le polyéther uréthanne triacrylate étant préparé à partir de
- 1 mole de polypropylèneglycol ramifié, de poids moléculaire de 1.000,
- 3 moles d'isophorone-diisocyanate, et
- 3 moles d'acrylate d'hydroxyéthyle;
- Oligomère n° 2:: polyester acrylate de poids moléculaire 900 possédant en moyenne 4 insaturations acryliques par chaîne, le polyester acrylate étant préparé à partir d'acide adipique, de glycérol oxypropylé et de l'acide acrylique;
- Oligomère n° 3:: une solution à 88 % en poids d'un uréthanne diacrylate aliphatique et à 12% en poids de HDDA, l'uréthanne diacrylate étant préparé à partir de
- 1 mole de caprolactone de poids moléculaire de 600,
- 2 moles d'isophorone-diisocyanate, et
- 2 moles d'acrylate d'hydroxyéthyle;
- Oligomère n° 4:: polyéther uréthanne diacrylate aromatique préparé à partir de
- 1 mole de polypropylèneglycol, de poids moléculaire de 1.000,
- 2 moles de toluène-diisocyanate, et
- 2 moles d'acrylate d'hydroxyéthyle;
- Oligomère n° 5:: une solution à 80 % en poids de diacrylate d'éther diglycidylique de bisphénol A et à 20 % en poids de HDDA;
- Oligomère n° 6:: une solution à 70 % en poids d'un oligomère entièrement acrylique de poids moléculaire 7.000 et à 30 % en poids de HDDA, l'oligomère entièrement acrylique étant préparé à partir d'acrylate de butyle, d'acide acrylique et de méthacrylate de méthyle.

### Exemple 1. Effet du méthacrylate de 2-(2-oxo-1-pyrrolidinyl)éthyle sur la viscosité de compositions durcissables par rayonnement.

Dans cet exemple, on montre l'effet de l'addition de quantités croissantes de méthacrylate de 2-(2-oxo-1-pyrrolidinyl)éthyle (HEPMA) sur la viscosité d'une composition durcissable par rayonnement classique. On mesure cette viscosité à 25°C au moyen d'un appareil Brookfield sans dilution des compositions. Dans le Tableau I ci-dessous, cette viscosité est exprimée en mPa.s. Les compositions ont été préparées par simple mélange des constituants, sous agitation et léger chauffage à 40 °C pour faciliter la dissolution mutuelle.

**TABLEAU I**

| Effet de la quantité de HEPMA sur la viscosité | | | | | | |
|---|---|---|---|---|---|---|
| | Constituants (parties en poids) | | | | | Viscosité (mPa.s) |
| Comp. | Oligomère n°1 | HDDA | Irgacure 500 | Ebecryl 350 | HEPMA | |
| 1 | 60 | 30 | 5 | 1 | 0 | 1042 |
| 2 | 60 | 30 | 5 | 1 | 10 | 720 |
| 3 | 60 | 30 | 5 | 1 | 20 | 540 |
| 4 | 60 | 30 | 5 | 1 | 30 | 414 |
| 5 | 60 | 30 | 5 | 1 | 40 | 324 |

Le tableau I illustre très clairement que le méthacrylate de 2-(2-oxo-1-pyrrolidinyl)éthyle possède un pouvoir d'abaissement remarquable de la viscosité des compositions durcissables par rayonnement.

### Exemple 2. Effet du méthacrylate de 2-(2-oxo-1-pyrrolidinyl)éthyle sur la réactivité de compositions durcissables par rayonnement.

Dans cet exemple, on compare la réactivité de différentes compositions durcissables par rayonnement contenant des quantités croissantes soit du HEPMA (conforme à l'invention), soit de la N-vinyl-2-pyrrolidone (à titre comparatif).

On applique au moyen d'un filmographe sur des films de chlorure de polyvinyle souples une couche de 10 micromètres de chacune des compositions dont les constituants et leurs quantités (en parties en poids) sont indiqués dans le tableau II ci-dessous. On fait défiler ensuite ces films à des vitesses croissantes, à une distance de 10 cm, sous une lampe UV à vapeur de mercure à pression moyenne (G2M) d'une puissance de 80 W/cm.

On détermine ensuite les valeurs de deux paramètres représentatifs de la réactivité des compositions.

Pour la mesure de la "vitesse de séchage", en mètres par minute, indiquée à l'avant-dernière colonne du tableau, on détermine la vitesse de passage la plus élevée du film à laquelle apparaît le maculage.

Pour la mesure de la "vitesse au talc" en m/minute indiquée à la dernière colonne du tableau, on opère de la manière suivante: immédiatement après passage sous la lampe, on applique avec un doigt du talc sur une moitié du film enduit, ensuite on frotte cinq fois légèrement avec un morceau d'étoffe absorbant la partie talquée. Puis on compare en lumière rasante les deux parties. Si l'enduit est bien durci, la partie traitée au talc présente la même brillance que l'autre partie et il n'y a pas de halo à la séparation des deux parties. Si au contraire la partie traitée est devenue plus mate que l'autre partie, c'est que le durcissement n'est pas complet et que la dose UV reçue n'est pas suffisante. On appelle "vitesse au talc" la vitesse maximum, exprimée en m/minute, à laquelle la partie traitée au talc reste aussi brillante que l'autre partie.

Dans le tableau II, les compositions n°2, 3 et 4 sont conformes à l'invention, tandis que les compositions n°6, 7 et 8 sont introduites à titre comparatif.

Les résultats obtenus sont reportés dans le tableau II.

**TABLEAU II.**

| Effet du méthacrylate de 2-(2-oxo-1-pyrrolidinyl)éthyle sur la réactivité | | | | | | | | |
|---|---|---|---|---|---|---|---|---|
| | Constituants (parties en poids) | | | | | | | |
| Comp. | Oligomère n°1 | HDDA | Irgacure 500 | Ebecryl 350 | HEPMA | NVP | Vitesse de séchage (m/min) | Vitesse au talc (m/min) |
| 2 | 60 | 30 | 5 | 1 | 10 | - | 10 | 10 |
| 6 * | 60 | 30 | 5 | 1 | - | 10 | 10 | 5 |
| 3 | 60 | 30 | 5 | 1 | 20 | - | 5 | 5 |
| 7 * | 60 | 30 | 5 | 1 | - | 20 | 5 | 2,5 |
| 4 | 60 | 30 | 5 | 1 | 30 | - | 5 | 5 |
| 8 * | 60 | 30 | 5 | 1 | - | 30 | 5 | 2,5 |

| | | | | | | | | |
|---|---|---|---|---|---|---|---|---|
| *: à titre comparatif | | | | | | | | |

Le tableau II montre que la réactivité (vitesse au talc) des compositions conformes à l'invention contenant du HEPMA est supérieure à celle des compositions non conformes à l'invention renfermant la N-vinyl-2-pyrrolidone (vitesse au talc de 10 m/minute pour la composition n°2 contenant 10 parties en poids de HEPMA, comparée à une vitesse au talc de 5 m/minute pour la composition n°6 contenant la même quantité de NVP, et vitesse au talc de 5 m/minute pour les compositions n°3 et 4 contenant respectivement 20 et 30 parties de HEPMA, comparées à une vitesse au talc de 2,5 m/minute pour les compositions n°7 et 8 contenant les mêmes quantités de NVP).

Ces résultats indiquent un meilleur durcissement en surface lorsque l'on emploie le HEPMA.

### Exemple 3. Résistance à l'abrasion de revêtements durcis obtenus à partir de compositions contenant le méthacrylate de 2-(2-oxo-1-pyrrolidinyl)éthyle.

Dans cet exemple, on compare la résistance à l'abrasion de revêtements durcis obtenus à partir de différentes compositions durcissables par rayonnement contenant soit du HEPMA (conforme à l'invention), soit de la NVP (à titre comparatif), comme diluants réactifs.

Les compositions sont appliquées au moyen d'un filmographe en une épaisseur de couche de 40 micromètres sur des films de chlorure de polyvinyle souples et durcies sous la lampe UV de la même manière qu'à l'exemple 2.

Pour évaluer la résistance à l'abrasion, on a soumis les échantillons au test de Taber: l'appareil utilisé est un "Taber Abraser 5150" équipé d'une roue de type CS-17 et d'un poids de 1 kg; les échantillons à tester sont montés sur une carte de type S-36; la perte de poids de l'échantillon en milligrammes est mesurée au moyen d'une balance analytique, après 200 et 300 cycles de frottement.

La résistance à l'abrasion est exprimée en perte de matière des échantillons, en mg.

On a également mesuré la vitesse de séchage et la vitesse au talc selon les tests décrits à l'exemple 2. En outre, on a testé la résistance aux solvants des revêtements durcis; cette résistance est exprimée par le nombre de doubles frottements (aller et retour) avec un tampon d'ouate imbibé d'acétone, qui n'altère pas l'aspect de la surface du revêtement durci.

La viscosité a été déterminée au moyen d'un appareil Brookfield comme à l'exemple 1.

Dans le tableau III:
- la première ligne donne le numéro de la composition testée;
- les 2^{e}, 3^{e}, 4^{e}, 5^{e}, 5^{e}, 7^{e} et 8^{e} lignes, les constituants des compositions et leur quantités, en parties en poids;
- la 9^{e} ligne, la vitesse de séchage des compositions, en m/minute;
- la 10^{e} ligne, la vitesse au talc, en m/minute;
- la 11^{e} ligne, la résistance aux solvants (nombre de doubles frottements à l'acétone);
- la 12^{e} ligne, la viscosité des compositions en mPa.s à 25°C;
- les 13^{e}, 14^{e} et 15^{e} lignes, la résistance à l'abrasion, en mg de perte de matière, après 200 et 300 cycles de frottements (l'échantillon qui présente la perte la plus faible est le plus résistant à l'abrasion).

**TABLEAU III.**

| Résistance à l'abrasion des revêtements durcis | | | | | |
|---|---|---|---|---|---|
| Composition (parties en poids) | 9* | 10 | 11 | 12* | 13 |
| Oligomère n° 5 | 70 | 70 | 70 | - | - |
| Oligomère n° 3 | - | - | - | 80 | 80 |
| HDDA | 30 | 30 | 30 | 20 | 20 |
| Ebecryl P115 | - | - | - | 5 | 5 |
| NVP | 10 | - | - | 10 | - |
| HEPMA | - | 10 | 30 | - | 10 |
| Irgacure 500 | 5 | 5 | 5 | 5 | 5 |
| Vitesse de séchage (m/min) | 2,5 | 2,5 | 2,5 | 10 | 10 |
| Vitesse au talc (m/min) | 2,5 | 2,5 | 2,5 | 5 | 5 |
| Résistance aux solvants | >100 | >100 | >100 | >200 | >200 |
| Viscosité (mPa.s à 25°C) | 210 | 310 | 220 | 2.060 | 1.980 |
| Résistance à l'abrasion (mg) | | | | | |
| Nombre de cycles | | | | | |
| 200 | 6,3 | 5,6 | 5,5 | 3,6 | 2,4 |
| 300 | 13,3 | 11,6 | 9,0 | 7,5 | 5,2 |

| | | | | | |
|---|---|---|---|---|---|
| *: à titre comparatif | | | | | |

Dans le tableau III, les compositions n° 10, 11 et 13 sont conformes à l'invention, tandis que les compositions n° 9 et 12 sont données à titre de comparaison.

Si l'on compare la composition n° 9 avec les compositions n° 10 et 11, on voit que les compositions n° 10 et 11 qui contiennent du HEPMA permettent d'obtenir une meilleure résistance à l'abrasion que la composition n°9 contenant de la NVP. En effet, la perte de matière est de 9,0 mg pour la composition n°11, alors qu'elle est de 13,3 mg pour la composition n°9, après 300 cycles, et la perte de matière est de 11,6 mg pour la composition n° 10, contre 13,3 mg pour la composition n°9 contenant de la NVP, après 300 cycles.

Par ailleurs, si l'on compare les compositions n°12 et 13, qui contiennent des quantités égales respectivement de NVP et de HEPMA, on observe également une meilleure résistance à l'abrasion pour la composition n°13 contenant du HEPMA que pour la composition n°12 contenant de la NVP (5,2 mg de perte de matière contre 7,5 mg respectivement, après 300 cycles).

Ces faits mettent bien en évidence que les revêtements obtenus à partir de compositions contenant du HEPMA résistent mieux à l'abrasion que ceux obtenus à partir de compositions contenant de la NVP, composé qui est d'un usage courant dans les revêtements résistants à l'abrasion.

En outre, les revêtements durcis résistent parfaitement à plus de 100, voire même 200 doubles frottements avec un tampon d'ouate imbibé à l'acétone.

### Exemple 4. Adhérence des revêtements durcis obtenus à partir des compositions contenant le méthacrylate de 2-(2-oxo-1-pyrrolidinyl)éthyle.

Dans cet exemple, on compare l'adhérence de revêtements durcis obtenus au moyen de compositions durcissables par rayonnement contenant des quantités croissantes soit de HEPMA (conforme à l'invention), soit de NVP (à titre comparatif), comme diluants réactifs.

Les compositions sont appliquées au moyen d'un filmographe en une épaisseur de couche de 10 micromètres sur des films de poly(téréphtalate d'éthylène) (PET) et de chlorure de polyvinyle (PVC). Les compositions sont ensuite durcies sous la lampe UV de la même manière qu'à l'exemple 2.

Pour évaluer l'adhérence, on applique un ruban adhésif du type Tesa 4104 sur le film durci à tester et qui a été préalablement entaillé de manière à y pratiquer des petits carrés de 1 mm de côté (test sur entailles quadrillées) et on décolle le ruban adhésif d'un coup sec. On détermine le nombre de petits carrés qui n'ont pas été entrainés relativement au nombre qui était initialement au contact du ruban adhésif; le rapport entre ces deux nombres, exprimé en %, donne la mesure de l'adhérence, le chiffre de 100% correspondant à une adhérence parfaite.

On a également mesuré la vitesse de séchage et la vitesse au talc selon les tests décrits à l'exemple 2; en outre, on a testé la résistance aux solvants comme à l'exemple 3.

La viscosité a été déterminée comme à l'exemple 1.

Dans le tableau IV:
- la première ligne donne le numéro de la composition testée;
- les 2^{e}, 3^{e}, 4^{e}, 5^{e}, 6^{e} et 7^{e} lignes, les constituants des compositions et leur quantités, en parties en poids;
- la 8^{e} ligne, la viscosité des compositions en mPa.s à 25°C;
- la 9^{e} ligne, la vitesse de séchage, en m/minute;
- la 10^{e} ligne, la vitesse au talc, en m/minute;
- la 11^{e} ligne, la résistance aux solvants (nombre de doubles frottements à l'acétone);
- les 12^{e} et 13^{e} lignes, l'adhérence du revêtement, en pour-cent, successivement sur du poly(téréphtalate d'éthylène)(PET) et sur du chlorure de polyvinyle (PVC).

**TABLEAU IV.**

| Adhérence des revêtements durcis sur les films en matière plastique. | | | | |
|---|---|---|---|---|
| Composition (parties en poids) | 14* | 15* | 16 | 17 |
| Oligomère n° 6 | 80 | 80 | 80 | 80 |
| HDDA | 20 | 20 | 20 | 20 |
| Irgacure 184 | 3 | 3 | 3 | 3 |
| Darocure 1173 | 3 | 3 | 3 | 3 |
| NVP | 10 | 20 | - | - |
| HEPMA | - | - | 10 | 20 |
| Viscosité (mPa.s à 25°C) | 1342 | 780 | 2120 | 1540 |
| Vitesse de séchage (m/min) | 5 | 5 | 5 | 5 |
| Vitesse au talc (m/min) | 5 | 5 | 2,5 | 2,5 |
| Résistance aux solvants | >100 | >100 | >100 | >100 |
| Adhérence sur PET (%) | 0 | 0 | 0 | 100 |
| Adhérence sur PVC (%) | 100 | 100 | 100 | 100 |

| | | | | |
|---|---|---|---|---|
| *: à titre comparatif | | | | |

Dans le tableau IV, les compositions n° 16 et 17 sont conformes à l'invention, alors que les compositions n° 14 et 15 sont données à titre comparatif.

Toutes les compositions testées permettent d'obtenir une excellente adhérence sur le chlorure de polyvinyle. Contrairement à la composition n°15 contenant 20 parties en poids de NVP, la composition n°17 contenant la même quantité de HEPMA permet d'obtenir une bonne adhérence sur le poly(térephtalate d'éthylène), mais au détriment de la réactivité.

### Exemple 5. Propriétés mécaniques des revêtements durcis obtenus à partir des compositions contenant le méthacrylate de 2-(2-oxo-1-pyrrolidinyl)éthyle.

Dans cet exemple, on compare les propriétés mécaniques, en l'occurrence l'allongement à la rupture, la charge à la rupture ainsi que le module de Young, de revêtements durcis obtenus au moyen de compositions durcissables par rayonnement contenant soit du HEPMA (conforme à l'invention), soit de la NVP (à titre comparatif), comme diluants réactifs.

Les compositions sont appliquées au moyen d'un filmographe en une épaisseur de couche de 100 micromètres, sur des feuilles d'acier étamé, et durcies sous la lampe UV de la même manière qu'à l'exemple 2.

Les valeurs des trois propriétés étudiées ont été mesurées sur des éprouvettes du film durci et séparé de son substrat. Les éprouvettes ont une épaisseur de 100 micromètres et une dimension de 1 cm de largeur sur 3 cm de longueur; pour ces déterminations, on se sert d'un appareil Instron, et on réalise les mesures (ASTM D 638-61T) avec une vitesse de traction de 50 mm/min à 21°C.

On a également mesuré la vitesse de séchage et la vitesse au talc selon les tests décrits à l'exemple 2. En outre, on a testé la résistance aux solvants comme à l'exemple 3.

La viscosité a été déterminée au moyen d'un appareil Brookfield comme à l'exemple 1.

Dans le tableau V:
- la première ligne donne le numéro de la composition testée;
- les 2^{e}, 3^{e}, 4^{e}, 5^{e}, 6^{e}, 7^{e} et 8^{e} lignes, les constituants des compositions et leurs quantités, en parties en poids;
- la 9^{e} ligne, la viscosité des compositions, en mPa.s à 25°C;
- la 10^{e} ligne, la vitesse de séchage des compositions, en m/minute;
- la 11^{e} ligne, la vitesse au talc, en m/minute;
- la 12^{e} ligne, la résistance aux solvants (nombre de doubles frottements à l'acétone);
- la 13^{e} ligne, l'allongement à la rupture, en pour-cent;
- la 14^{e} ligne, la charge à la rupture, en MPa;
- la 15^{e} ligne, le module de Young, en MPa.

**TABLEAU V.**

| Propriétés mécaniques des revêtements durcis | | | | | |
|---|---|---|---|---|---|
| Composition (en parties en poids) | 18* | 19 | 20 | 21* | 22 |
| Oligomère n° 3 | 80 | 80 | 80 | - | - |
| Oligomère n° 1 | - | - | - | 60 | 60 |
| HDDA | 20 | 20 | 20 | 30 | 30 |
| Irgacure 500 | 5 | 5 | 5 | 5 | 5 |
| Ebecryl 350 | - | - | - | 1 | 1 |
| NVP | 10 | - | - | - | - |
| HEPMA | - | 10 | 22 | - | 40 |
| Viscosité (mPa.s à 25°C) | 1480 | 2324 | 1480 | 1042 | 324 |
| Vitesse de séchage | 10 | 5 | 5 | 20 | 2,5 |
| (m/minute) | | | | | |
| Vitesse au talc en | 5 | 5 | 5 | 15 | 2,5 |
| (m/minute) | | | | | |
| Résistance aux solvants | >100 | >100 | >100 | >100 | >100 |
| Allongement à la rupture (%) | 18,8 | 25 | 16,4 | 20,3 | 25 |
| Charge à la rupture (MPa) | 39,4 | 31,5 | 33,4 | 23,2 | 26,9 |
| Module de Young (MPa) | 767 | 543 | 640 | 340 | 478 |

| | | | | | |
|---|---|---|---|---|---|
| *: à titre comparatif. | | | | | |

Dans le tableau V, les compositions n°19, 20 et 22 sont conformes à l'invention, tandis que les compositions n°18 et 21 sont données à titre comparatif.

Le tableau V montre que le remplacement de la N-vinyl-2-pyrrolidone par le HEPMA n'a pratiquement pas d'influence sur les propriétés mécaniques des revêtements durcis obtenus.

Le tableau V montre aussi que l'incorporation de HEPMA dans les revêtements augmente l'allongement à la rupture, la charge à la rupture et le module de Young (comparer les résultats obtenus avec la composition n° 22 avec ceux obtenus avec la composition n° 21).

### Exemple 6. Taux d'incorporation du méthacrylate de 2-(2-oxo-1-pyrrolidinyl)éthyle dans un revêtement après durcissement.

On montre dans cet exemple par deux méthodes différentes que le HEPMA est incorporé pratiquement à 100% dans un revêtement durci par un rayonnement ultraviolet.

### Méthode A

On prépare la composition n°23 conforme à l'invention contenant:

| | Parties en poids |
|---|---|
| Oligomère n° 2 | 60 |
| OTA 480 | 30 |
| HEPMA | 10 |
| Benzophénone | 5 |
| Ebecryl 350 | 1 |

On applique au moyen d'un filmographe un film de cette composition en une épaisseur de 10 micromètres sur un film de polyéthylène ayant subi un traitement par décharge corona. Le film est irradié sous la lampe UV à vapeur de mercure à pression moyenne (80 W/cm) dans les mêmes condition qu'à l'exemple 2, avec une vitesse de défilement du film de 5 m/minute.

Ensuite, des tests d'extraction ont été réalisés au moyen de cellules de Maturi, selon la norme ASTM F34-63T. A cet effet, un film de 280 cm² à tester est laissé en contact avec 140 ml d'eau distillée pendant 10 jours à 40°C. Puis, on soumet un échantillon de ce liquide à la chromatographie en phase liquide à haute performance (HPLC) sur une colonne contenant une phase inverse C18, avec un mélange d'eau et d'acétonitrile comme éluant. Il n'est pas possible de détecter du HEPMA dans ces conditions, la limite de détection de l'appareil étant de 50 ppm; le HEPMA est donc complètement incorporé dans le film durci.

### Méthode B

On soumet les films durcis obtenus à partir des compositions n°18 et 19 de l'exemple 5 à une analyse thermogravimétrique. Pour ce faire, on soumet une quantité d'échantillon à tester de l'ordre de 50 mg à un chauffage faisant passer sa température progressivement de 20 à 80°C, à la vitesse de 20°C par minute. On pèse l'échantillon sur une balance analytique après qu'il soit passé aux températures de 20, 60 et 80°C, en lui attribuant un poids de 100% à 20°C.

Dans ces conditions, le film provenant de la composition n°18 (non conforme à l'invention), qui contient 10 parties en poids de NVP, présente un poids de 99,98% à 60°C, et un poids de 99,80% à 80°C. Le film provenant de la composition n°19 (conforme à l'invention), qui contient la même quantité de HEPMA (au lieu de NVP), présente un poids de 100,0% à 60°C et de 99,94% à 80°C.

On voit donc que la perte de poids du film contenant le HEPMA est insignifiante, l'incorporation du HEPMA dans le film durci étant quasi-totale. La perte de poids du film contenant la NVP est un peu plus importante, surtout à 80°C.

### Exemple 7. Autres caractéristiques d'une composition contenant du méthacrylate de 2-(2-oxo-1-pyrrolidinyl)éthyle et de revêtements préparés à partir de celle-ci.

On prépare une composition (n° 24) durcissable sous rayonnement, conforme à l'invention, en mélangeant ensemble:

| | Parties en poids |
|---|---|
| Oligomère n° 4 | 40 |
| OTA 480 | 10 |
| TPGDA | 12 |
| HEPMA | 18 |
| Ebecryl P115 | 2 |
| Benzophénone | 4 |
| Irgacure 651 | 2 |

On étend cette composition sur un film de chlorure de polyvinyle souple au moyen d'un filmographe en une épaisseur de couche de 10 micromètres. Puis, on exécute l'irradiation UV au moyen d'une lampe à vapeur de mercure à pression moyenne (80 W/cm) dans les mêmes conditions qu'à l'exemple 2 (distance de 10 cm).

Vitesse de séchage et vitesse au talc: 5 m/minute.

Le revêtement durci résiste à plus de 200 doubles frottements (aller et retour) avec un tampon d'ouate imbibé d'acétone.

L'adhérence sur PVC, déterminée par le test sur entailles quadrillées comme à l'exemple 4, est de 100%.

La dureté Persoz, déterminée à 21°C selon la norme NF T 30-016, est de 307 secondes.

La résistance aux salissures est déterminée de la manière suivante: on dépose une goutte d'alcool iodé sur le revêtement durci; après 1 minute, on nettoye la goutte au moyen d'un morceau de coton imbibé d'alcool, puis on examine le revêtement pour savoir si l'alcool iodé a pénétré dans le revêtement. Appliqué à la composition n° 24 étudiée ici, on constate que la pénétration d'alcool iodé est nulle; par conséquent, sa résistance aux salissures est de 100%.

On a encore déterminé la résistance à l'eau en immergeant le film pendant 48 heures dans de l'eau à 21 °C et en mesurant ensuite l'adhérence du revêtement au substrat par le test sur entailles quadrillées, comme à l'exemple 4.

La résistance à l'eau ainsi déterminée est de 100 %.

Les caractéristiques ainsi testées montrent la très bonne qualité des revêtement durcis obtenus à partir des compositions conformes à l'invention.

### Exemple 8. Caractéristiques de compositions contenant de l'acrylate de 2-(2-oxo-1-pyrrolidinyl)éthyle et de revêtements préparés à partir de celles-ci.

On prépare trois compositions (n° 25, 26 et 27) durcissables par rayonnement conformes à l'invention contenant de l'acrylate de 2-(2-oxo-1-pyrrolidinyl)éthyle (HEPA).

Les compositions sont appliquées au moyen d'un filmographe en une épaisseur de couche de 10 micromètres sur des films de chlorure de polyvinyle souples et durcies sous la lampe UV de la même manière qu'à l'exemple 2.

On a mesuré la vitesse de séchage et la vitesse au talc selon les tests décrits à l'exemple 2; en outre on a testé la résistance aux solvants comme à l'exemple 3. La viscosité a été mesurée au moyen d'un appareil Brookfield comme à l'exemple 1.

Dans le tableau VI:
- la première ligne donne le numéro de la composition testée;
- les 2^{e}, 3^{e}, 4^{e}, 5^{e}, 6^{e}, 7^{e} et 8^{e} lignes, les constituants des compositions et leur quantités, en parties en poids;
- la 9^{e} ligne, la viscosité des compositions, en mPa.s à 25°C;
- la 10^{e} ligne, la vitesse de séchage des compositions, en m/minute;
- la 11^{e} ligne, la vitesse au talc, en m/minute;
- la 12^{e} ligne, la résistance aux solvants (le nombre de doubles frottements à l'acétone).

**TABLEAU VI**

| Compositions contenant de l'acrylate de 2-(2-oxo-1-pyrrolidinyl)éthyle | | | |
|---|---|---|---|
| Composition (parties en poids) | 25 | 26 | 27 |
| Oligomère n° 1 | 60 | 60 | - |
| Oligomère n° 3 | - | - | 80 |
| HDDA | 30 | 30 | 20 |
| Ebecryl P115 | - | - | 5 |
| Irgacure 500 | 5 | 5 | 5 |
| Ebecryl 350 | 1 | 1 | - |
| HEPA | 10 | 20 | 10 |
| Viscosité (mPa.s à 25°C) | 754 | 580 | 2000 |
| Vitesse de séchage en (m/min) | 15 | 15 | 10 |
| Vitesse au talc (m/min) | 10 | 10 | 5 |
| Résistance aux solvants | >100 | >100 | >100 |

Le tableau VI montre que l'acrylate de 2-(2-oxo-1-pyrrolidinyl)éthyle donne des résultats comparables à ceux obtenus avec le méthacrylate de 2-(2-oxo-1-pyrrolidinyl)éthyle quant au pouvoir d'abaissement de la viscosité et quand à la réactivité des compositions durcissables par rayonnement.

On observe aussi que les revêtements durcis présentent une excellente résistance à plus de 100 doubles frottements à l'acétone.

### Exemple 9. Caractéristiques de compositions contenant du méthacrylate de 2-(2-oxo-1-pyrrolidinyl)éthyle durcies par un faisceau d'électrons accélérés.

On prépare une composition (n° 28) contenant de la N-vinyl-2-pyrrolidone (à titre comparatif), et une composition (n° 29) contenant du méthacrylate de 2-(2-oxo-1-pyrrolidinyl)éthyle (conforme à l'invention)

Ces compositions sont appliquées au moyen d'un filmographe en une épaisseur de couche de 10 micromètres sur des films de chlorure de polyvinyle souples et durcies par un faisceau d'électrons accélérés émis sous une tension de 175 keV au moyen d'un appareil ESI-Lab Unit.

On détermine ensuite les valeurs de deux paramètres représentatifs de la réactivité des compositions, à savoir la vitesse de séchage et la vitesse au talc. La "vitesse de séchage" représente la dose exprimée en mégarads nécessaire pour le durcissement du revêtement jusqu'à un point tel qu'il n'y a plus de maculage. La "vitesse au talc" représente la dose, exprimée en mégarads, nécessaire pour le durcissement du revêtement, ce durcissement étant mesuré selon le test décrit à l'exemple 2. On a également testé la résistance aux solvants, comme à l'exemple 3.

Dans le tableau VII :
- la première ligne donne le numéro de la composition testée;
- les 2^{e}, 3^{e}, 4^{e} et 5^{e} lignes, les constituants des compositions et leur quantités, en parties en poids;
- la 6^{e} ligne, la vitesse de séchage des compositions, en mégarads;
- la 7^{e} ligne, la vitesse au talc, en mégarads;
- la 8^{e} ligne, la résistance aux solvants (le nombre de double frottements à l'acétone).

**TABLEAU VII.**

| Composition (parties en poids) | 28 * | 29 |
|---|---|---|
| Oligomère n°3 | 80 | 80 |
| HDDA | 20 | 20 |
| NVP | 10 | - |
| HEPMA | - | 10 |
| Vitesse de séchage (Mrads) | 1 | 1 |
| Vitesse au talc (Mrads) | 2 | 2 |
| Résistance aux solvants | >100 | >100 |

| | | |
|---|---|---|
| *: à titre comparatif | | |

## Revendications

1. Compositions durcissables par rayonnement, caractérisées en ce qu'elles comprennent, pour 100 parties en poids,
(a) au moins 20 parties en poids d'au moins un composé radiopolymérisable renfermant au moins deux groupes choisis parmi CH₂=CH-COO- et CH₂=C(CH₃)-COO-, et
(b) au moins 5 parties en poids d'au moins un acrylate de (2-oxo-1-pyrrolidinyl)alkyle répondant à la formule générale 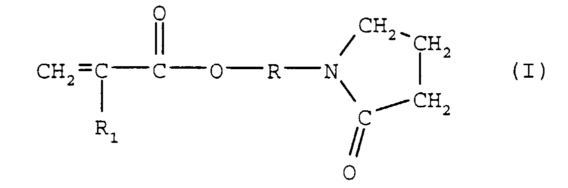 dans laquelle R représente un radical alkylène contenant 2 à 4 atomes de carbone et R₁ représente un atome d'hydrogène ou un radical méthyle.

2. Compositions selon la revendication 1, caractérisées en ce que l'acrylate de (2-oxo-1-pyrrolidinyl)alkyle (b) est l'acrylate ou le méthacrylate de 2-(2-oxo-1-pyrrolidinyl)éthyle.

3. Compositions selon l'une quelconque des revendications 1 et 2, caractérisées en ce qu'elles comprennent, pour 100 parties en poids, 5 à 50 parties en poids d'acrylate de (2-oxo-1-pyrrolidinyl)alkyle (b).

4. Compositions selon l'une quelconque des revendications 1 à 3, caractérisées en ce que le composé (a) contient 2 à 15, de préférence 2 à 6 groupes choisis parmi CH₂=CH-COO- et CH₂=C(CH₃)-COO- par molécule.

5. Compositions selon l'une quelconque des revendications 1 à 4, caractérisées en ce que le composé (a) est un composé choisi parmi les esters acryliques et méthacryliques d'alcools polyhydriques contenant 2 à 6 groupes hydroxyle.

6. Compositions selon l'une quelconque des revendications 1 à 4, caractérisées en ce que le composé (a) est un oligomère ou prépolymère de poids moléculaire inférieur à 10.000.

7. Compositions selon la revendication 6, caractérisées en ce que l'oligomère ou prépolymère est choisi parmi les polyester acrylates, les polyester méthacrylates, les uréthanne acrylates, les uréthanne méthacrylates, les époxy acrylates, les époxy méthacrylates, les acrylique acrylates et les acrylique méthacrylates.

8. Compositions selon l'une quelconque des revendications 1 à 7, caractérisées en ce qu'elles comprennent, en plus, un ou plusieurs oligomère(s) ou polymère(s) saturé(s) ou insaturé(s) autre(s) que le composé (a).

9. Compositions selon la revendication 8, caractérisées en ce que ledit oligomère ou polymère autre que le composé (a) est choisi parmi les polyesters saturés, les polyesters insaturés, les polymères (méth)acryliques et les polyesters halogénés.

10. Compositions selon l'une quelconque des revendications 8 et 9, caractérisées en ce qu'elles comprennent ledit oligomère ou polymère autre que le composé (a) mélangé avec au moins un composé (a) choisi parmi les esters acryliques et méthacryliques d'alcools polyhydriques contenant 2 à 6 groupes hydroxyle.

11. Compositions selon l'une quelconque des revendications 1 à 10, caractérisées en ce qu'elles comprennent, pour 100 parties en poids, 35 à 95 parties en poids d'au moins un composé (a) contenant au moins deux groupes CH₂=CH-COO- ou CH₂=C(CH₃)-COO-.

12. Compositions selon l'une quelconque des revendications 1 à 11, caractérisées en ce qu'elles comprennent, en plus, un photoinitiateur, et éventuellement une amine tertiaire comme activateur.

13. Compositions selon la revendication 12, caractérisées en ce qu'elles comprennent, pour 100 parties en poids, jusqu'à 15 parties en poids de photoinitiateur.

14. Compositions selon l'une quelconque des revendications 1 à 13, caractérisées en ce qu'elles comprennent, en plus, au moins un constituant auxiliaire choisi parmi les adjuvants, les charges, les pigments et les colorants.

15. Procédé de revêtement d'un substrat, caractérisé en ce que l'on applique sur la surface dudit substrat une composition durcissable par rayonnement selon l'une quelconque des revendications 1 à 14, l'acrylate de (2-oxo-1-pyrrolidinyl)alkyle (b) étant présent en une quantité suffisante pour produire une composition ayant une viscosité substantiellement moindre que la viscosité du composé (a) et en ce que l'on expose ladite composition à des rayons ultraviolets ou un faisceau d'electrons accélérés pendant une durée suffisante pour former un revêtement durci.

16. Enduits, vernis, peintures, encres et adhésifs pour laminés, durcissables par irradiation ultraviolette, comprenant les compositions selon l'une quelconque des revendications 1 à 14.

17. Enduits, vernis, peintures, encres et adhésifs pour laminés, durcissable par faisceau d'électrons accélérés, comprenant les compositions selon l'une quelconque des revendications 1 à 14.

18. Articles manufacturés pour la fabrication desquels on utilise les enduits, vernis, peintures, encres et adhésifs conformes à la revendication 16 ou 17.

## Patentansprüche

1. Strahlungshärtbare Zusammensetzungen, dadurch gekennzeichnet, daß sie auf 100 Gewichtsteile
(a) wenigstens 20 Gewichtsteile wenigstens einer strahlungspolymerisierbaren Verbindung, die wenigstens zwei Gruppen enthält, die unter CH₂=CH-COO- und CH₂=C(CH₃)-COO- ausgewählt sind, und
(b) wenigstens 5 Gewichtsteile wenigstens eines (2-Oxo-1-pyrrolidinyl)alkyl-Acrylats, das der allgemeinen Formel 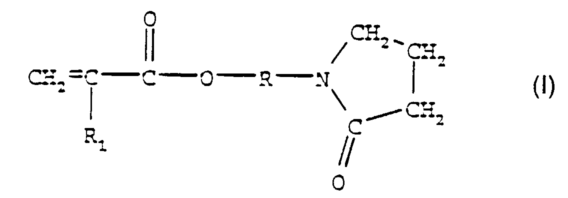 entspricht, in der R einen Alkylenrest mit 2 bis 4 Kohlenstoffatomen darstellt und R₁ ein Wasserstoffatom oder einen Methylrest darstellt,
enthalten.

2. Zusammensetzungen gemäß Anspruch 1, dadurch gekennzeichnet, daß das (2-Oxo-1-pyrrolidinyl)alkyl-Acrylat (b) das 2-(2-Oxo-1-pyrrolidinyl)ethyl-Acrylat oder -Methacrylat ist.

3. Zusammensetzungen gemäß einem der Ansprüche 1 und 2, dadurch gekennzeichnet, daß sie auf 100 Gewichtsteile 5 bis 50 Gewichtsteile (2-Oxo-1-pyrrolidinyl)alkyl-Acrylat (b) enthalten.

4. Zusammensetzungen gemäß einem der Ansprüche 1 bis 3, dadurch gekennzeichnet, daß die Verbindung (a) pro Molekül 2 bis 15, vorzugsweise 2 bis 6 Gruppen enthält, die unter CH₂=CH-COO- und CH₂=C(CH₃)-COO- ausgewählt sind.

5. Zusammensetzungen gemäß einem der Ansprüche 1 bis 4, dadurch gekennzeichnet, daß die Verbindung (a) eine Verbindung ist, die unter den Acryl- und Methacrylsäureestem von mehrwertigen Alkoholen mit 2 bis 6 Hydroxylgruppen ausgewählt ist.

6. Zusammensetzungen gemäß einem der Ansprüche 1 bis 4, dadurch gekennzeichnet, daß die Verbindung (a) ein Oligomer oder Prepolymer mit einem Molekulargewicht kleiner 10.000 ist.

7. Zusammensetzungen gemäß Anspruch 6, dadurch gekennzeichnet, daß das Oligomer oder Prepolymer unter den Polyester-Acrylaten, den Polyester-Methacrylaten, den Urethan-Acrylaten, den Urethan-Methacrylaten, den Epoxy-Acrylaten, den Epoxy-Methacrylaten, den Acrylsäure-Acrylaten und den Acrylsäure-Methacrylaten ausgewählt ist.

8. Zusammensetzungen gemäß einem der Ansprüche 1 bis 7, dadurch gekennzeichnet, daß sie außerdem ein oder mehrere von der Verbindung (a) verschiedene(s) gesättigte(s) oder ungesättigte(s) Oligomer(e) oder Polymer(e) enthalten.

9. Zusammensetzungen gemäß Anspruch 8, dadurch gekennzeichnet, daß das von der Verbindung (a) verschiedene Oligomer oder Polymer unter den gesättigten Polyestem, den ungesättigten Polyestern, den (Meth)acrylsäure-Polymeren und den halogenierten Polyestern ausgewählt ist.

10. Zusammensetzungen gemäß einem der Ansprüche 8 und 9, dadurch gekennzeichnet, daß sie das von der Verbindung (a) verschiedene Oligomer oder Polymer gemischt mit wenigstens einer Verbindung (a), die unter den Acrylsäure- und Methacrylsäureestem von mehrwertigen Alkoholen mit 2 bis 6 Hydroxylgruppen ausgewählt sind, enthalten.

11. Zusammensetzungen gemäß einem der Ansprüche 1 bis 10, dadurch gekennzeichnet, daß sie auf 100 Gewichtsteile 35 bis 95 Gewichtsteile wenigstens einer Verbindung (a) mit wenigstens zwei Gruppen CH₂=CH-COO- oder CH2=C(CH3)-COO- enthalten.

12. Zusammensetzungen gemäß einem der Ansprüche 1 bis 11, dadurch gekennzeichnet, daß sie außerdem einen Photoinitiator und gegebenenfalls ein tertiäres Amin als Aktivierungsmittel enthalten.

13. Zusammensetzungen gemäß Anspruch 12, dadurch gekennzeichnet, daß sie auf 100 Gewichtsteile bis zu 15 Gewichtsteile Photoinitiator enthalten.

14. Zusammensetzungen gemäß einem der Ansprüche 1 bis 13, dadurch gekennzeichnet, daß sie außerdem wenigstens einen Hilfsbestandteil umfassen, der unter den Zusatzstoffen, den Füllstoffen, den Pigmenten und den Farbstoffen ausgewählt ist.

15. Verfahren zur Beschichtung eines Substrats, dadurch gekennzeichnet, daß man auf die Oberfläche besagten Substrats eine strahlungshärtbare Zusammensetzung gemäß einem der Ansprüche 1 bis 14 aufbringt, wobei das (2-Oxo-1-pyrrolidinyl)alkyl-Acrylat (b) in einer Menge vorhanden ist, die ausreicht, um eine Zusammensetzung zu erzeugen, die eine Viskosität besitzt, die wesentlich geringer als die Viskosität der Verbindung (a) ist, und dadurch daß man besagte Zusammensetzung während einer Dauer, die zur Bildung einer harten Beschichtung ausreicht, Ultraviolettstrahlen oder einem Strahl beschleunigter Elektronen aussetzt.

16. Anstriche, Lacke, Farben, Druckfarben und Kleber für Walzwerkerzeugnisse, die durch ultraviolette Bestrahlung härtbar sind und die die Zusammensetzungen gemäß einem der Ansprüche 1 bis 14 enthalten.

17. Anstriche, Lacke, Farben, Druckfarben und Kleber für Walzwerkerzeugnisse, die durch einen Strahl beschleunigter Elektronen härtbar sind und die die Zusammensetzungen gemäß einem der Ansprüche 1 bis 14 enthalten.

18. Erzeugnisse, für deren Herstellung man die Anstriche, Lacke, Farben, Druckfarben und Kleber gemäß Anspruch 16 oder 17 verwendet.

## Claims

1. A radiation curable composition, characterised in that it comprises, per 100 parts by weight,
a) at least 20 parts by weight of at least one radiation polymerisable compound containing at least two groups selected from CH₂=CH-COO- and CH₂=C(CH₃)-COO-; and
b) at least 5 parts by weight of at least one alkyl(2-oxo-1-pyrrolidinyl) acrylate of general formula I: 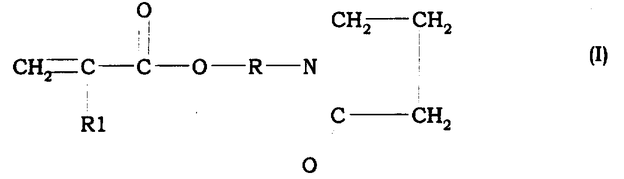 wherein R represents an alkylene radical containing 2 to 4 carbon atoms and R₁ represents a hydrogen atom or a methyl group.

2. A composition according to claim 1, characterised in that the (2-oxo-1-pyrrolidinyl)alkyl acrylate (b) is 2-(2-oxo-1-pyrrolidinyl)ethyl acrylate or methacrylate.

3. A composition according to any one of claims 1 or 2, characterised in that it comprises, per 100 parts by weight, 5 to 50 parts by weight of a the (2-oxo-1-pyrrolidinyl)alkyl acrylate (b).

4. A composition according to any one of claims 1 to 3, characterised in that compound (a) contains 2 to 15 and, preferably, 2 to 6 groups, selected from CH₂=CH-COO- or CH₂=C(CH₃)-COO-, per molecule.

5. A composition according to any one of claims 1 to 4, characterised in that compound (a) is a compound selected from the group consisting of the acrylic and methacrylic acid esters of polyhydric alcohols containing 2 to 6 hydroxyl groups.

6. A composition according to any one of claims 1 to 5, characterised in that compound (a) is an oligomer or prepolymer having a molecular weight less than 10,000.

7. A composition according to claim 6, characterised in that the oligomer or prepolymer is selected from the group consisting of polyester acrylates, polyester methacrylates, urethane acrylates, urethane methacrylates, epoxy acrylates, epoxy methacrylates, acrylic acrylates or an acrylic methacrylates.

8. A composition according to any one of claims 1 to 7, characterised in that it further comprises one or more saturated or unsaturated oligomer or polymer different from compound (a).

9. A composition according to claim 8, characterised in that the said oligomer or polymer different from compound (a) is selected from the group consisting of saturated polyesters, unsaturated polyesters, (meth)acrylic polymers and halogenated polyesters.

10. A composition according to any one of claims 8 or 9, characterised in that it comprises said oligomer or polymer different from compound (a), in admixture with at least one compound (a) selected from the group consisting of the acrylic and methacrylic acid esters of polyhydric alcohols containing 2 to 6 hydroxyl groups.

11. A composition according to any one of claims 1 to 10, characterised in that it comprises, per 100 parts by weight, 35 to 95 parts by weight of at least one compound (a) containing at least two groups selected from CH₂=CH-COO- or CH₂=C(CH₃)-COO-.

12. A composition according to any one of claims 1 to 11, characterised in that it further comprises a photoinitiator, and optionally, a tertiary amine as an activator.

13. A composition according to claim 12, characterised in that it comprises, per 100 parts by weight, up to 15 parts by weight of the photoinitiator.

14. A composition according to any one of claims 1 to 13, characterised in that it further comprises at least one auxiliary constituent selected from additives, fillers, pigments and dyes.

15. A process for coating a substrate, characterised in that it comprises applying to the surface of said substrate a radiation curable composition according to any one of claims 1 to 14, in which the (2-oxo-1-pyrrolidinylalkyl acrylate (b) is present in an amount sufficient to produce a composition with a viscosity substantially less than the viscosity of compound (a), and exposing the said composition to ultraviolet rays or to an accelerated electron beam for a period of time sufficient to form a cured coating.

16. A coating, varnish, paint, ink or adhesive for laminates, curable by ultraviolet irradiation, comprising a composition according to any one of claims 1 to 14.

17. A coating, varnish, paint, ink or adhesive for laminates, curable by an accelerated electron beam, comprising a composition according to any one of claims 1 to 14.

18. A manufactured article formed using a coating, varnish, paint, ink or adhesive according to claim 16 or 17.
